# EUROPÄISCHE PATENTSCHRIFT

(11) **EP 4 123 570 B1**
(45) Veröffentlichungstag und Bekanntmachung des Hinweises auf die Patenterteilung: **03.09.2025**
(21) Anmeldenummer: 21187468.0
(22) Anmeldetag: 23.07.2021
(51) Int. Cl.: G06T 3/06, G06T 7/11

(54) **AUTOMATISCHE ERZEUGUNG EINER REPROJEKTIONS-PANORAMAANSICHT AUS DENTALEN DVT-VOLUMEN MITTELS MASCHINELLER LERNVERFAHREN**
AUTOMATIC GENERATION OF A REPROJECTION PANORAMA VIEW FROM DENTAL DVT MASSES BY MEANS OF MACHINE LEARNING
GÉNÉRATION AUTOMATIQUE D'UNE VUE PANORAMIQUE DE RÉPROJECTION À PARTIR DE VOLUMES DENTAIRES DE LA TOMOGRAPHIE VOLUMÉTRIQUE AU MOYEN D'UN PROCÉDÉ D'APPRENTISSAGE AUTOMATIQUE

(43) Veröffentlichungstag der Anmeldung: 25.01.2023
(73) Patentinhaber: DENTSPLY SIRONA Inc., York, PA 17401 (US); Sirona Dental Systems GmbH, 64625 Bensheim (DE)
(72) Erfinder: Bertleff, Marco, 64625 Bensheim (DE); Braun, Tim, 64625 Bensheim (DE); Stannigel, Kai, 64625 Bensheim (DE)
(74) Vertreter: Taor, Simon Edward William

(56) Entgegenhaltungen:
- DE-A1- 102010 040 096
- US-A1- 2013 022 252
- US-A1- 2020 175 681
- HINGST V ET AL: "Dentale Röntgendiagnostik mit der Panoramaschichtaufnahme - Technik und typische Bildbefunde", RADIOLOGE, DER, SPRINGER, DE, vol. 60, no. 1, 2020, pages 77 - 92, XP036989877, ISSN: 0033-832X, [retrieved on 20200109], DOI: 10.1007/S00117-019-00620-1

## Beschreibung

### TECHNISCHES GEBIET DER ERFINDUNG

Die vorliegende Erfindung bezieht sich auf ein Verfahren zur Erzeugung einer Reprojektions-Panoramaansicht (RPA) aus einem dentalen DVT-Volumen eines Patienten.

### HINTERGRUND DER ERFINDUNG

Im Bereich der dentalen Diagnostik ist die Panoramaschichtaufnahme ein etabliertes und wichtiges Hilfsmittel, das in einem einzigen Bild einen Überblick über alle Zähne sowie die knöchernen Strukturen des Gesichtsschädels (Kieferknochen, -gelenke und -höhlen) erlaubt. Sie kann von spezialisierten Aufnahmesystemen direkt erstellt werden.

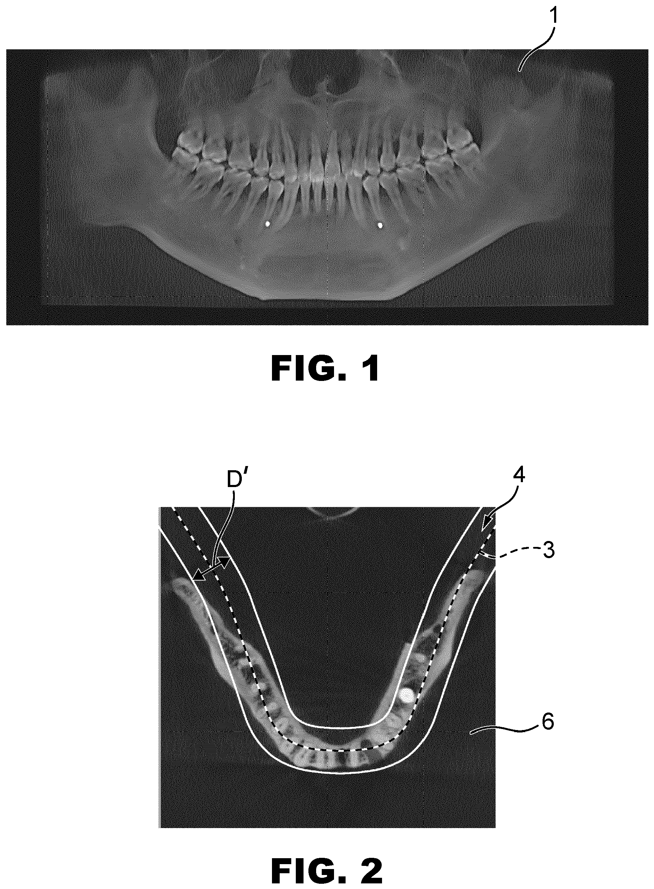

Benötigt man jedoch für die Untersuchung eines Patienten primär eine DVT-Aufnahme, oder liegt nur eine solche Aufnahme aus vorangegangenen Untersuchungen vor, kann eine der Panoramaschichtaufnahme inhaltlich nahekommende Übersicht auch softwaregestützt durch Reprojektion der dreidimensionalen Bilddaten aus dem DVT-Volumen berechnet werden (im Folgenden als Reprojektions-Panoramaansicht oder RPA bezeichnet). Abb. 1 zeigt eine typische RPA. Zur Erstellung einer RPA aus einem DVT-Volumen wird typischerweise ein gekrümmter Teilbereich des Volumendatensatzes ausgewählt, der die dental relevanten anatomischen Strukturen (wie z.B. den Kieferbogen) möglichst eng umschließt. Dieser dreidimensionale Teilbereich (im folgenden Projektionsbereich genannt) wird dann auf seine zweidimensionale äußere oder innere Mantelfläche projiziert (meist durch Akkumulation der Bilddaten entlang der Normalen der Krümmungslinie) und das Ergebnis anschließend als planares 2D-Bild dargestellt.

Eine vollständig freie, manuelle Definition des Projektionsbereiches einer RPA in drei Dimensionen ist mit einem hohen Aufwand und einem hohen Anspruch an das räumliche Vorstellungsvermögen eines Benutzers verbunden. Daher wird stattdessen von vielen existierenden Systemen (wie z.B. Sicat Implant, Sidexis4, Sante Dental) eine bzgl. des Patienten in der transversalen Schnittebene definierte Führungskurve verwendet, die zunächst mit Hilfe einer einstellbaren Dicke (D') zu einer zweidimensionalen Fläche in der transversalen Ebene erweitert wird. Abbildung 2 zeigt eine Führungskurve (gestrichelte Linie) in einer transversalen Schnittebene eines von der Grundlage für Abb. 1 unterschiedlichen DVT-Volumens. Der Schnitt der vorderen und hinteren Grenzflächen des abgeleiteten Projektionsbereichs mit der transversalen Ebene ist mit durchgezogenen Linien eingezeichnet.

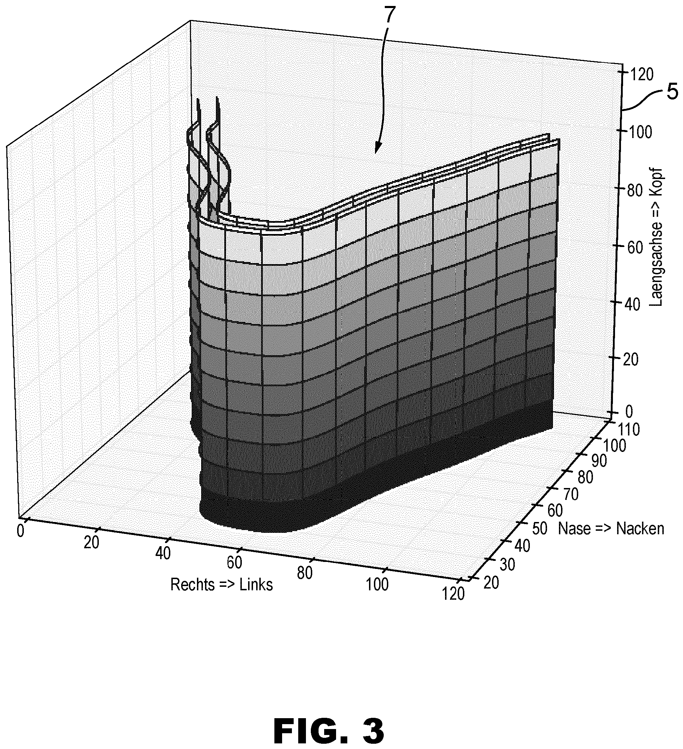

Aus dieser zweidimensionalen Fläche wird dann durch lineare Extrusion entlang der Patienten-Längsachse der dreidimensionale Projektionsbereich im DVT-Volumen bestimmt. Abbildung 3 zeigt eine Vordere und hintere Grenzfläche des dreidimensionalen Projektionsbereiches nach linearer Extrusion einer Führungskurve entlang der Patienten-Längsachse (z). Das Beispiel aus Abb. 1 zeigt die RPA eines Schädels mit einer für eine Reprojektion nach dem Stand der Technik *günstigen* dentalen Anatomie, bei dem Ober- und Unterkiefer relativ ähnliche Formen haben und entlang der Patientenlängsachse gut überlappen. Daher sind in der RPA auch alle relevanten anatomischen Strukturen abgebildet.

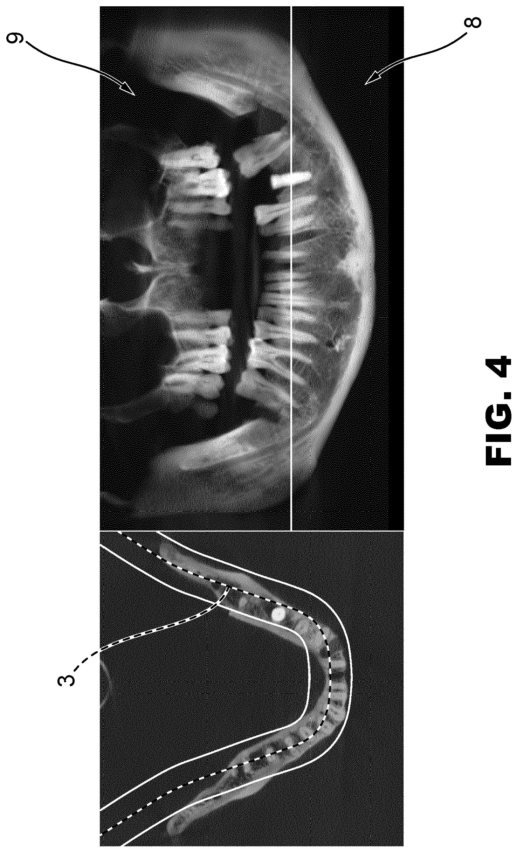

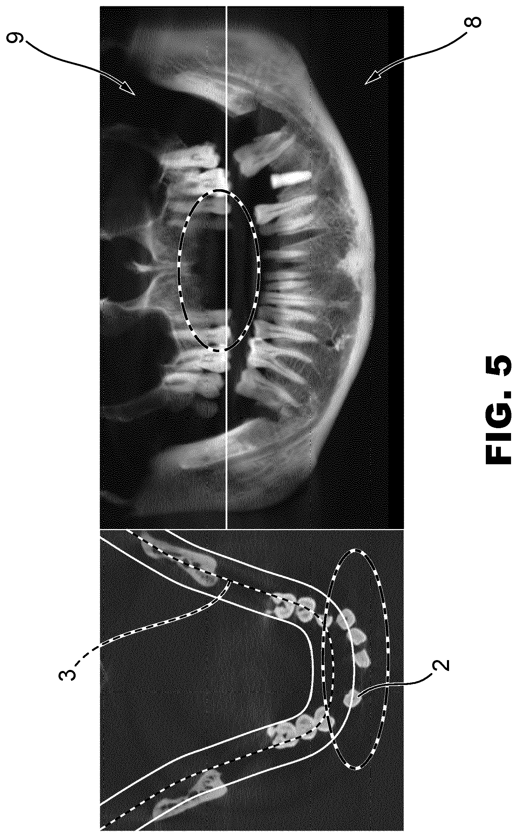

Durch die vereinfachte Bestimmung des Projektionsbereiches (Angabe einer nur zweidimensionalen Führungskurve und anschließender linearer Extrusion in die dritte Dimension) ist es zwar leichter, manuell einen Bereich für die RPA festzulegen, jedoch tritt häufig das Problem auf, dass die Anatomie des Kieferbogens nicht vollständig in den ,senkrecht nach oben' extrudierten Projektionsbereich passt. Oft kann man in solchen Fällen die Lage der Führungskurve zwar so wählen, dass ein Kieferbogen gut abgedeckt wird, der andere jedoch nicht. Ein Beispiel für eine RPA bei einem Schädel mit einer solchen für eine Reprojektion nach dem Stand der Technik ungünstiger dentaler Anatomie ist in Abbildung 4 und 5 zu sehen. Hier ist der Unter- und Oberkiefer gegeneinander versetzt. Abbildung 2 zeigt eine Führungskurve, die gut zum Unterkiefer passt (links: transversale Ebene mit Führungskurve (durchgestrichelte Linie) und Projektionsbereich (zwischen durchgezogenen Linien). Rechts: resultierende RPA mit Lageindikation der Höhe der links dargestellten transversalen Ebene). Abbildung 3 zeigt nun diese Führungskurve aus Abbildung 4 in einer im Oberkiefer befindlichen transversalen Schicht. Es ist deutlich zu erkennen, dass die Kurve schlecht zum Oberkiefer passt und dass daher die aus dem resultierenden Projektionsbereich herausragende Frontzähne (innerhalb der Ellipse) nicht in der RPA abgebildet werden. Durch die Wahl einer hohen Dicke bei der Bestimmung des Projektionsbereichs aus der Führungskurve steigt die Chance, das versetzt übereinanderliegende Ober- und Unterkiefer trotzdem noch beide vom Projektionsbereich umfasst werden. Der Nachteil dieses Ansatzes besteht aber darin, dass durch die gleichzeitig zunehmend enthaltenen Weichgewebeanteile die Knochenstrukturen stärker verwischen und insgesamt der Kontrast der RPA abnimmt. Insgesamt ist die Erstellung von RPAs nach dem Stand der Technik bei Patienten mit ungünstiger Anatomie daher problematisch.

Obwohl das Platzieren der Führungskurve die Bestimmung des Projektionsbereichs für den Arzt erleichtert, bedeutet dieser manuelle Bearbeitungsschritt für ihn weiterhin einen Zeitaufwand. Um das zu vermeiden, sind Verfahren zur automatischen Generierung einer Führungskurve für RPAs bekannt, die Ansätze aus der Bildverarbeitung nutzen, wie z.B. Schwellwert-Segmentierungen oder Kantendetektionen, um den knöchernen Zahnbogen in einer oder mehrerer transversaler Schichten zu detektieren und anschließend eine Führungskurve durch diesen detektierten Bereich zu legen. Diese Ansätze mit Bildverarbeitung können jedoch bei Bildartefakten wie zum Beispiel hellen Überstrahlungen durch Metallabschattung den interessanten Bereich leicht falsch bestimmen und damit in Folge zur einer RPA führen, die nicht alle im DVT-Volumen abgebildeten, dental relevanten Strukturen optimal abbildet.

Es wird ferner auf die folgenden Dokumente verwiesen: DE102010040096A1 offenbart ein Verfahren zur Erstellung einer Aufnahme aus einem 3D-Volumen.

US2013022252A1 offenbart die Erzeugung von Panoramabildern aus CBCT-Dentalbildern.

US2020175681A1 offenbart ein System und Verfahren zur Erstellung von interessierenden Elementen (EoI) fokussierten Panoramen eines oralen Komplexes.

Hingst V. et al, "Dentale Röntgendiagnostik mit der Panoramaschichtaufnahme - Technik und typische Bildbefunde", RADIOLOGE, DER, SPRINGER, DE, vol. 60, no. 1, doi:10.1007/S00117-019-00620-1, ISSN 0033-832X, (2020), pages 77 - 92, (20200109), XP036989877.

### OFFENBARUNG DER ERFINDUNG

Ein Ziel der vorliegenden Erfindung ist die Bereitstellung eines Verfahrens zur automatischen Erzeugung einer RPA aus einem dentalen DVT-Volumen eines Patienten, welches die dental relevanten anatomischen Strukturen des aufgenommenen Patienten vollständig abbildet und dabei keine manuelle Zuarbeit von Benutzerseite erfordert.

Das Ziel wird durch das Verfahren nach Anspruch 1 erreicht. Die Gegenstände der abhängigen Ansprüche definieren Weiterentwicklungen und bevorzugte Ausführungsformen.

Das Erfindungsgemäße Verfahren dient zur automatischen Erzeugung einer Reprojektions-Panoramaansicht (RPA) aus einem dentalen DVT-Volumen eines Patienten. Das Verfahren umfasst folgende Schritte: Lokalisierung von dental relevanten anatomischen Strukturen im DVT-Volumen durch Nutzung eines maschinellen Lernverfahrens; Automatische Platzierung einer Führungskurve durch Optimierung derselben auf Basis der Lage der lokalisierten dental relevanten anatomischen Strukturen, wobei die Führungskurve sich wie folgt ergibt: Kurve, die durch frei wählbare Stützpunkte und eine Interpolationsvorschrift definierbar ist; oder Kurve, welche aus einer Menge vorgegebener Kurvenformen ausgewählt wird und unter geometrischen Transformationen angepasst werden kann; Definieren eines Projektionsbereiches der Reprojektions-Panoramaansicht unter Verwendung der platzierten Führungskurve ohne manuelle Schritte im DVT-Volumen, sodass die lokalisierten dental relevanten anatomische Strukturen umfasst werden; Erstellung der Reprojektions-Panoramaansicht durch Reprojektion des DVT Volumens im definierten Projektionsbereich.

Ein vorteilhafte Wirkung der Erfindung ist dass sie die automatische Platzierung der Führungskurve verbessert, da sie im Vergleich zu bekannten Bildanalyseverfahren viel direkter und spezifischer nach den für den Arzt auch dental relevante anatomischen Strukturen sucht. Daher ist sie weniger stark von allgemeinen Bildartefakten, Schwankungen der optischen Dichten der Aufnahmen und unterschiedlichem Rauschverhalten betroffen als z.B. Schwellwertfilterungen oder Kantendetektionen.

### KURZBESCHREIBUNG DER ZEICHNUNGEN

In der nachfolgenden Beschreibung wird die vorliegende Erfindung anhand von beispielhaften Ausführungsformen und unter Bezugnahme auf die Zeichnungen näher erläutert, wobei
- Abb.1 -: zeigt eine typische Reprojektions-Panoramaansicht nach dem Stand der Technik;
- Abb.2 -: zeigt eine Führungskurve des manuell abgeleitetem Projektionsbereich in einer transversalen Schnittebene eines DVT-Volumens nach dem Stand der Technik;
- Abb. 3 -: zeigt einen durch lineare Extrusion aus einer Führungskurve bestimmten Projektionsbereich nach dem Stand der Technik;
- Abb. 4 -: zeigt eine Führungskurve mit nach dem Stand der Technik abgeleitetem Projektionsbereich, der gut zu einem im DVT-Volumen abgebildeten Unterkieferbogen passt;
- Abb. 5 -: zeigt dieselbe Führungskurve mit nach dem Stand der Technik abgeleitetem Projektionsbereich, der schlecht zu einem im DVT-Volumen abgebildeten Oberkieferbogen passt;
- Abb. 6 -: zeigt einen transversalen Schnitt durch einen an dental relevante anatomische Strukturen lokal angepassten Projektionsbereich nach einer Ausführungsform der Erfindung;
- Abb. 7 -: zeigt eine dreidimensionale Darstellung eines an den dental relevanten anatomischen Strukturen angepassten Projektionsbereiches aus Abb. 6;
- Abb. 8 -: zeigt eine Reprojektions-Panoramaansicht nach einer Ausführungsform der Erfindung;
- Abb. 9 -: zeigt eine schematische Darstellung eines DVT-Röntgensystems nach einer Ausführungsform der Erfindung.

Die in den Zeichnungen gezeigten Referenznummern bezeichnen die unten aufgeführten Elemente, auf die in der nachfolgenden Beschreibung der beispielhaften Ausführungsformen Bezug genommen wird.
- 1.: Reprojektions-Panoramaansicht (RPA)
- 2.: Dental relevante anatomische Struktur
- 3, 3': Führungskurve, Kurve
- 4.: Projektionsbereich
- 5.: Senkrechte Extrusionsachse
- 6.: Transversalen Schnittebene
- 7.: Lineare Extrusion
- 8.: Unterkieferbogen
- 9.: Oberkieferbogen
- 10.: Stützpunkte
- 11.: Mittelpunkt
- 12.: DVT-System
- 13.: Röntgengerät
- 14.: Röntgenstrahler
- 15.: Röntgendetektor
- 16.: Bedienungseinheit
- 17.: Kopffixierung
- 18.: Aufbiss
- 19.: Rechner
- 20.: Anzeige
- D:: Dicke des Projektionsbereichs (4) (in der transversalen Schnittebene(6)).

Das erfindungsgemäße Verfahren dient zur automatischen Erzeugung einer Reprojektions-Panoramaansicht (1) aus einem dentalen DVT-Volumen eines Patienten.

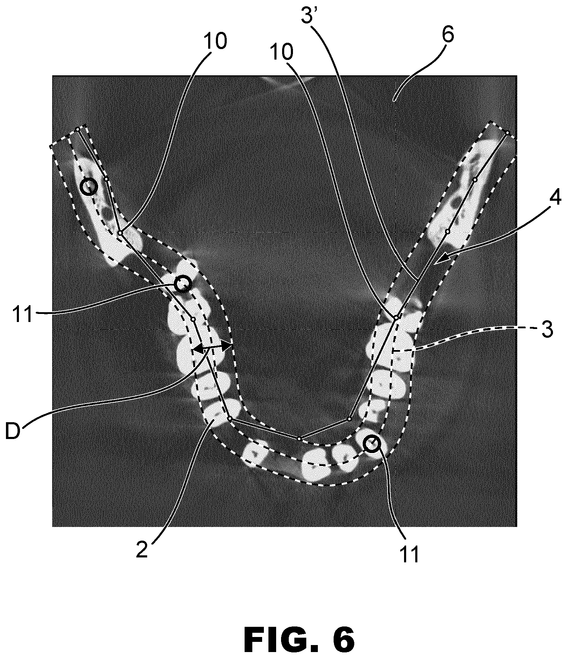

Das Verfahren umfassend Schritte S1 bis S4. In Schritt S1 werden dental relevanten anatomischen Strukturen (2) im DVT-Volumen durch Nutzung eines maschinellen Lernverfahrens lokalisiert. Abb. 6. zeigt eine Transversalen Schnittebene (6) im DVT-Volumen mit den lokalisierten dental relevanten anatomischen Strukturen (2).

Die dental relevanten anatomischen Strukturen (2) können folgende Strukturen sein: Kiefergelenk, Kieferknochen, Zähne, Wurzelspitzen, Implantate, Foramen Mandibulae, Foramen Mentale, Foramen incisivum, Foramen Palatinum Majus, Foramen infraorbitale, Processus coronoideus, Spina Nasalis Anterior, Spina Nasalis Posterior, Canalis Mandibularis, Canalis Incisivus.

In Schritt S2 wird die Führungskurve (3) automatisch durch Optimierung derselben auf Basis der Lage der lokalisierten dental relevanten anatomischen Strukturen (2) platziert. Die Platzierung und Optimierung werden im nachfolgend später detaillierter erklärt. Abb. 6. zeigt eine Transversalen Schnittebene (6) im DVT-Volumen in der die Führungskurve (3) platziert ist.

In Schritt (S3) wird der Projektionsbereich (4) der Reprojektions-Panoramaansicht (1) unter Verwendung der platzierten Führungskurve (3) ohne manuelle Schritte im DVT-Volumen definiert, sodass die lokalisierten dental relevanten anatomische Strukturen (3) umfasst werden. Abb. 6. zeigt eine Transversalen Schnittebene (6) im DVT-Volumen mit dem definierten Projektionsbereich (4), der die lokalisierten dental relevanten anatomische Strukturen (3) umfasst.

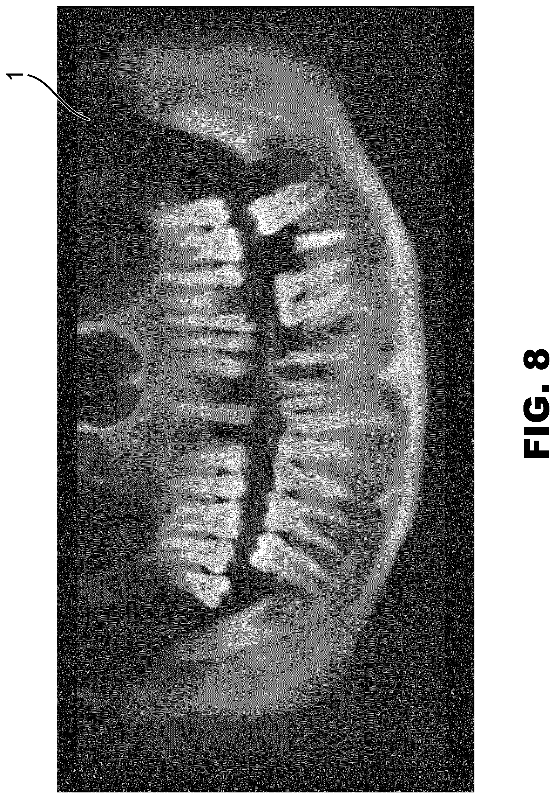

In Schritt S4 wird die Reprojektions-Panoramaansicht (1) durch Reprojektion des DVT Volumens im definierten Projektionsbereich (4) erstellt. Abb. 8 zeigt eine Reprojektions-Panoramaansicht (1), die durch dieses Verfahren erstellt wurde.

Die aus dem Projektionsbereich von Abb. 6 resultierende RPA ist in Abbildung 8 dargestellt. Es ist deutlich zu erkennen, dass die Anatomie-gerechte Anpassung des Projektionsbereiches dazu führt, dass *alle Schneidezähne* des Oberkiefers abgebildet werden. Dies illustriert den positiven Effekt der Erfindung, der insbesondere im direkten Vergleich mit dem in Abb. 5 durch eine Ellipse markierten Bereich deutlich wird, wo die Schneidezähne *nicht* zur Darstellung kommen.

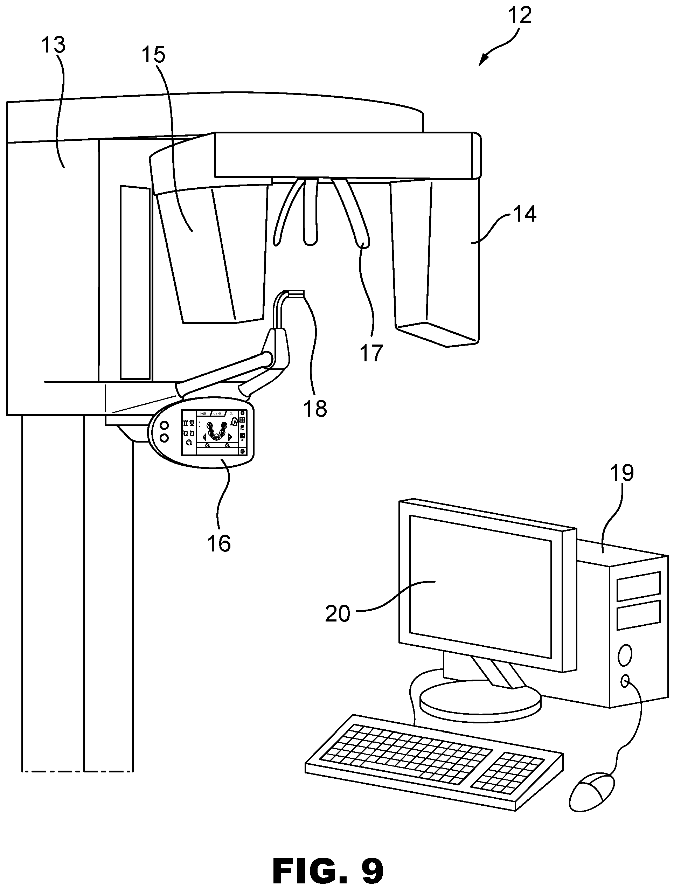

Das Verfahren verwendet in dem Schritt S1 ein maschinelles Lernverfahren, insbesondere ein neuronales Netz, welches durch eine Hardware oder Software implementiert werden kann. Das neuronale Netz wird in der nachfolgen Beschreibung später detailliert erklärt. Das DVT-Volumen wird dem neuronalen Netz durch ein DVT-Röntgensystem (12) bereitgestellt. Abb. 9 zeigt ein Ausführungsbespiel für ein DVT- Röntgensystem (12) die Rohbilddaten für das DVT-Volumen liefert. Das erfindungsgemäße Verfahren ist ein Computer-implementierbares Verfahren und kann auf einem Rechner (19) umgesetzt werden, auf dem die Berechnungen der Ausgaben des neuronalen Netzes bei gegebenen Eingaben des DVT-Volumens durchgeführt werden. Wie in Abb.9 gezeigt, umfasst das computergestützte DVT-System (12) ein Röntgengerät (2) zur Durchführung der Patientenaufnahme, wobei einzelne 2D Bilder oder ein Sinogramm erzeugt wird. Das Röntgengerät (13) hat einen Röntgenstrahler (14) und Röntgendetektor (15), die während der Aufnahme um den Patentknopf gedreht werden. Der Patientenkopf wird mit dem Aufbiss (18) und der Kopffixierung (17) im Röntgengerät positioniert. Das computergestützte DVT- Röntgensystem (12) umfasst eine Bedienungseinheit (16), vorzugsweise den Rechner (19) oder eine Recheneinheit, die mit dem Röntgengerät (13) verbunden werden kann, und vorzugsweise eine Anzeige (20), u.a. um die Datensätze zu visualisieren. Der Rechner (19) kann über ein lokales Netzwerk (nicht gezeigt) oder alternativ über das Internet mit dem Röntgengerät (13) verbunden werden. Der Rechner (19) kann Teil einer Cloud sein. Alternativ kann der Rechner (19) in das Röntgengerät (13) integriert werden. Die Berechnung des DVT-Volumens können alternativ in der Cloud stattfinden. Der Rechner (19) führt das Computerprogramm aus und liefert die Datensätze, u.a. auch für die Visulisierung auf der Anzeige (20). Die Anzeige (20) kann räumlich von dem Röntgengerät (13) getrennt sein. Der Rechner (19) kann vorzugsweise auch das Röntgengerät (13) steuern. Alternativ können separate Rechner für die Steuerung und die Rekonstruktion benutzt werden. Hierzu umfasst die vorliegende Erfindung auch ein Computerprogramm mit computerlesbarem Code. Das Computerprogramm kann auf einem Datenspeicher lokal oder in der Cloud bereitgestellt werden.

Die neuronalen Netze können mit dem DVT-System (12) integriert bereitgestellt werden. Alternativ können die neuronalen Netze separat bereitgestellt werden. Das DVT-System (12) kann mit den neuronalen Netzen lokal oder über ein Netzwerk verbunden werden.

Gemäß der vorliegenden Erfindung können die Datensätze, die durch die oben aufgeführte Ausführungsformen erzeugt werden, zur Visualisierung, insbesondere für diagnostische Zwecke, einem Arzt vorgelegt werden, vorzugsweise mittels einer Anzeige (20) oder Ausdrucks.

In alternativen Ausführungsformen können im Lokalisierungsschritt S1 verschiedene Varianten benutzt werden:
In einer ersten Variante S1.1 werden die Mittelpunkte (11) (s. Abb. 6) der dentalen relevanten anatomischen Strukturen (2) durch Anwendung mindestens eines trainierten CNNs zur Transformation des DVT-Volumens in *Heatmaps* lokalisiert, die die Position der dental relevanten anatomischen Strukturen (2) durch über einem Grenzwert liegende Voxel anzeigen. Abb. 6. zeigt eine Transversalen Schnittebene (6) im DVT-Volumen mit den Mittelpunkten (11) der lokalisierten dental relevanten anatomischen Strukturen (2).

Diese Ausführungsform hat den Vorzug, dass die zur Lokalisierung der Mittelpunkte notwendige Auflösung der DVT-Bilddaten verglichen mit anderen Ausführungsformen gering ist, und daher die Anwendung des neuronalen Netzes auf einer herunterskalierten Version des DVT-Volumens durchgeführt werden kann. Dies beschleunigt die Berechnungen enorm, da bei dreidimensionalen Volumendaten z.B. eine Halbierung der Auflösung dazu führt das nur noch 1/8 der Bildelemente verarbeitet werden müssen. Für den Anwender kann so eine Verzögerung der Bereitstellung der RPA vermieden werden.

In einer zweiten Variante S1.2 werden die Ausmaße der dental relevanten anatomischen Strukturen (2) mit Hilfe eines trainierten maschinellen Lernverfahrens lokalisiert und bestimmt, welches *Bounding Boxes* (nicht gezeigt) um die jeweiligen Strukturen berechnet. Diese Ausführungsform hat den Vorzug, dass die Gesamtausmaße der genannten Strukturen (2) bei der Bestimmung des Projektionsbereiches (4) genauer bekannt sind und daher der Projektionsbereich (4) besser gefasst werden kann. Auch eine adaptive Wahl der Dicke (D) des Projektionsbereiches ist so möglich. Eine Adaptive Wahl der Dicke kann so erfolgen, dass alle in einer Ebene geschnittenen Bounding Boxes gerade eben umfasst werden. Alternativ kann auch ein entlang der Kurve vorab festgelegtes Dickenprofil verwendet werden.

In einer dritten Variante S1.3 wird die genaue Form der dental relevanten anatomischen Strukturen (2) durch ein trainiertes maschinelles Lernverfahren bestimmt, das *Segmentierungsmasken* (nicht gezeigt) ausgibt. Diese Ausführungsform hat den Vorzug, dass die vollständige Information über die genaue Form der anatomischen Strukturen (2) vorliegt, und somit der Proj ektionsbereich (4) optimal an diese angepasst werden kann.

Die neuronalen Netze, die in den Varianten S1.1, S1.2 und S1.3 benutzt werden, können durch Datenpaare trainiert werden, die DVT-Volumen und Annotationen aufweisen. Diese Annotationen sind in der Lokalisierungs-Variante (S1.1) Heatmaps, in der Lokalisierungs-Variante (S1.2) Bounding Boxes, und in der Lokalisierungs-Variante (S1.3) Segmentierungsmasken. Dies können automatisch oder manuell erzeugt werden.

In einer Ausführungsform ergibt sich die Führungskurve (3) wie folgt. Die Kurve (3') (s. Abb.6) ist durch frei wählbare Stützpunkte (10) und eine Interpolationsvorschrift (z.B. Spline oder Polynom) definierbar. Alternativ wird die Kurve (3'), aus einer Menge vorgegebener Kurvenformen ausgewählt und unter geometrischen Transformationen (z.B. Translation, Rotation, Deformierung oder Skalierung) angepasst. Die freie Wahl von Stützpunkten (10) hat den Vorzug, dass die Führungskurve (3) bereits den für alle dental relevanten anatomischen Strukturen (2) gemeinsamen Verlauf optimal nachbilden kann, und somit die lokalen Anpassungen des Projektionsbereiches (4) reduziert werden können. Die Beschränkung der Führungskurve (3) auf vorgegebene Kurvenformen hingegen hat den Vorteil, dass die Formen den Anwendern aus den existierenden Systemen bereits Ähneln, und die sich aus der Form ergebenen Bildeindrücke erhalten werden. Dies erleichtert dem Anwender die Interpretation der RPA.

In einer Ausführungsform erfolgt die Optimierung hinsichtlich eines oder mehrerer der folgenden Kriterien (i), (ii) und (iii):
Nach einem ersten Kriterium (i) kann zum Beispiel die Summe der Abstände zwischen der Führungskurve (3) und den lokalisierten dental relevanten anatomischen Strukturen (2) miniert werden. Als Abstandsmaße können Folgende benutzt werden: a) Summe der Abstände zwischen den Strukturen (2) und ihren nächstliegenden Lotpunkten auf der Führungskurve (3); oder b) gewichtete Summe der Abstände zwischen den genannten Strukturen (2) und ihren nächstliegenden Lotpunkten auf der Führungskurve (3), wobei je nach anatomischer Struktur (2) und/oder Kurvenregion ein anderes Gewicht verwendet wird, wobei die Abstände durch eine beliebige Distanzmetrik berechnet werden.

Nach einem zweiten Kriterium (ii) kann die Ästhetik der resultierenden Reprojektions-Panoramaansicht (1) erhalten werden. Als Maß für die Ästhetik können mindestens eines der weiteren folgenden Kriterien zugrunde gelegt wird: lokale Verzerrungen der RPA (1), aufnahmebedingte Asymmetrie der RPA (1).

Nach einem dritten Kriterium (iii), können, im Falle von durch frei gewählte Stützpunkte (10) aufgespannte Kurven (3'), die Kurvenkomplexität, welche durch die Anzahl der Stützpunkte (10) oder Grad eines Polynoms bestimmt wird begrenzt werden.

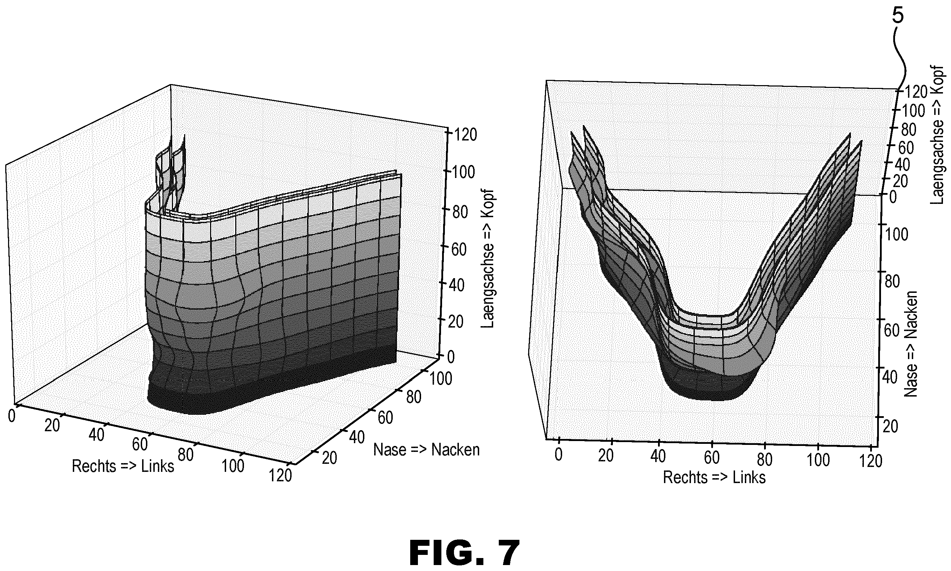

Im Folgenden wird der Definitionsschritt (S3) nach einer der Ausführungsformen detaillierter erklärt. Wie in Abb. 7 gezeigt ist, wird im Definitionsschritt (S3) der Projektionsbereich (4) in den transversalen Ebenen (6), in denen im Lokalisierungsschritt (S1) dental relevanten anatomischen Strukturen (2) gefunden wurden, entlang der jeweiligen Projektionsrichtung (i.e. den Normalen der Führungskurve) jeweils so verschoben, dass der Proj ektionsbereich (4) durch die dental relevanten anatomischen Strukturen (2) verläuft. Die notwendige Verschiebung des Projektionsbereichs (4) wird vorzugsweise zwischen einer vollen Verschiebung in den transversalen Ebenen (6) mit dental relevanten Strukturen und keiner Verschiebung ab einem geeignet gewählten Abstand zwischen den relevanten Strukturen und der Führungskurve interpoliert. Dies stellt sicher, dass eine gefundene Struktur (2) nur in seiner dreidimensional räumlichen Umgebung Einfluss auf die Form des Projektionsbereiches (4) nimmt. Bei der Wahl der Interpolationsfunktion sind verschiedene Ansätze wie z.B. eine radiale Gaussfunktion möglich. Ein Beispiel einer solchen lokalen Anpassung des Projektionsbereiches (4) ist in Abb. 6 und Abb. 7 zu sehen. Eine dental relevante anatomische Struktur (2) (der obere Eckzahn) bewirkt eine Verschiebung des Projektionsbereichsmitte *nach au*β*en hin,* durch Interpolation geht diese mit zunehmendem Abstand wieder in die Ausgangslage *zurück.*

In einer bevorzugten weiteren Ausführungsform wird im Definitionsschritt (S3) der Projektionsbereich (4) vorzugsweise dadurch bestimmt, dass in einer bzgl. des Patienten transversalen Schnittebene (6) die Führungskurve (3) zu einer zweidimensionalen Fläche mit einer festen Dicke oder einem entlang der Kurve vorab festgelegtem Dickenprofil in der transversalen Ebene erweitert wird und darauf folgend diese Fläche entlang der Patientenlängsachse extrudiert wird. Wobei, der Projektionsbereich (4) in den transversalen Schnittebenen, in denen im Lokalisierungsschritt (S1) dental relevanten anatomischen Strukturen (2) gefunden wurden, entlang der jeweiligen Projektionsrichtung jeweils derart lokal verschoben wird, dass der Projektionsbereich (4) durch die dental relevanten anatomischen Strukturen (2) verläuft. Wobei die Dicke (D) des Projektionsbereichs (4) entweder lokal oder global derart automatisch gewählt wird, dass die dental relevanten anatomischen Strukturen (2) vollständig oder zum Großteil innerhalb des Projektionsbereichs (4) liegen.

## Patentansprüche

1. Computer-implementiertes Verfahren zur automatischen Erzeugung einer Reprojektions-Panoramaansicht (RPA) (1) aus einem dentalen DVT-Volumen eines Patienten, **gekennzeichnet dadurch, dass** das Verfahren folgende Schritte umfasst;
(S1) Lokalisierung von dental relevanten anatomischen Strukturen (2) im DVT-Volumen durch Nutzung eines maschinellen Lernverfahrens;
(S2) Automatische Platzierung einer Führungskurve (3) durch Optimierung derselben auf Basis der Lage der lokalisierten dental relevanten anatomischen Strukturen (2),
wobei die Führungskurve (3) sich wie folgt ergibt:
Kurve, die durch frei wählbare Stützpunkte (10) und eine Interpolationsvorschrift definierbar ist; oder
Kurve, welche aus einer Menge vorgegebener Kurvenformen ausgewählt wird und unter geometrischen Transformationen angepasst werden kann;
(S3) Definieren eines Projektionsbereiches (4) der Reprojektions-Panoramaansicht (1) unter Verwendung der platzierten Führungskurve (3) ohne manuelle Schritte im DVT-Volumen, sodass die lokalisierten dental relevanten anatomischen Strukturen (3) umfasst werden;
(S4) Erstellung der Reprojektions-Panoramaansicht (1) durch Reprojektion des DVT Volumens im definierten Projektionsbereich (4).

2. Computer-implementiertes Verfahren nach Anspruch 1, **gekennzeichnet dadurch, dass** der Lokalisierungsschritt (S1) eine der folgenden Varianten umfasst:
- (S1.1) Lokalisierung der Mittelpunkte (11) der dentalen relevanten anatomischen Strukturen (2) durch Anwendung mindestens eines trainierten CNNs zur Transformation des DVT-Volumens in Heatmaps, die die Position der dental relevanten anatomischen Strukturen (2) durch über einem Grenzwert liegende Voxel anzeigen;
- (S1.2) Lokalisierung und Bestimmung der Ausmaße der dental relevanten anatomischen Strukturen (2) mit Hilfe eines trainierten maschinellen Lernverfahrens, das Bounding Boxes ausgibt; oder
- (S1.3) Lokalisierung und Bestimmung der genauen Form der dental relevanten anatomischen Strukturen (2) durch ein trainiertes maschinelles Lernverfahren, das Segmentierungsmasken ausgibt.

3. Computer-implementiertes Verfahren nach einem der vorangegangenen Ansprüche, wobei die Optimierung hinsichtlich eines oder mehrerer der folgenden Kriterien erfolgt:
- Minimierung eines Abstandsmaßes zwischen der Führungskurve (3) und den lokalisierten dental relevanten anatomischen Strukturen (2), Abstandsmaße können sein:
a) Summe der Abstände zwischen den Strukturen (2) und ihren nächstliegenden Lotpunkten auf der Führungskurve (3);
b) gewichtete Summe der Abstände zwischen den genannten Strukturen (2) und ihren nächstliegenden Lotpunkten auf der Führungskurve (3), wobei je nach anatomischer Struktur (2) und/oder Kurvenregion ein anderes Gewicht verwendet wird, wobei die Abstände durch eine beliebige Distanzmetrik berechnet werden;
- Erhaltung der Ästhetik der resultierenden RPA (1), wobei als Maß für die Ästhetik mindestens eines der folgenden Kriterien zugrunde gelegt wird: Vermeidung lokaler Verzerrungen der RPA (1), Reduzierung der aufnahmebedingten Asymmetrie der RPA (1);
- Im Falle von durch frei gewählte Stützpunkte (10) aufgespannte Kurven, Begrenzung der Kurvenkomplexität, welche durch die Anzahl der Stützpunkte (10) oder Grad eines Polynoms bestimmt wird.

4. Computer-implementiertes Verfahren nach einem der vorangegangenen Ansprüche, **gekennzeichnet dadurch, dass** die dental relevanten anatomischen Strukturen (2) mindestens eine der folgenden Strukturen sind: Kiefergelenk, Kieferknochen, Zähne, Wurzelspitzen, Implantate, Foramen Mandibulae, Foramen Mentale, Foramen incisivum, Foramen Palatinum Majus, Foramen infraorbitale, Processus coronoideus, Spina Nasalis Anterior, Spina Nasalis Posterior, canalis mandibularis, canalis incisivus.

5. Computer-implementiertes Verfahren nach einem der vorangegangenen Ansprüche, wobei im Definitionsschritt (S3) der Projektionsbereich (4) dadurch bestimmt wird, dass in einer bzgl. des Patienten transversalen Schnittebene (6) die Führungskurve (3) zu einer zweidimensionalen Fläche mit einer festen Dicke oder einem entlang der Kurve vorab festgelegtem Dickenprofil in der transversalen Ebene erweitert wird und darauf folgend diese Fläche entlang der Patientenlängsachse extrudiert wird.

6. Computer-implementiertes Verfahren nach Anspruch 5, wobei im Definitionsschritt (S3), der Projektionsbereich (4) in den transversalen Schnittebenen, in denen im Lokalisierungsschritt (S1) dental relevanten anatomischen Strukturen (2) gefunden wurden, entlang der jeweiligen Projektionsrichtung jeweils derart lokal verschoben wird, dass der Projektionsbereich (4) durch die dental relevanten anatomischen Strukturen (2) verläuft.

7. Computer-implementiertes Verfahren nach Anspruch 6, wobei die notwendige Verschiebung des Projektionsbereichs (4) zwischen der vollen Verschiebung in den transversalen Schnittebenen mit dental relevanten Strukturen (2) und keiner Verschiebung ab einem geeignet gewählten Abstand zwischen den relevanten Strukturen (2) und der Führungskurve (3) interpoliert wird.

8. Computer-implementiertes Verfahren nach einem der vorangegangenen Ansprüche 5 bis 7 wobei im Definitionsschritt (S3) die Dicke (D) des Projektionsbereichs (4) entweder lokal oder global derart automatisch gewählt wird, dass die dental relevanten anatomischen Strukturen (2) vollständig oder zum Großteil innerhalb des Projektionsbereichs (4) liegen.

9. Computer-implementiertes Verfahren nach einem der vorangegangenen Ansprüche 1 bis 8, wobei im Lokalisierungsschritt (S1) für das Trainieren Datenpaare von DVT-Volumen und Annotationen aufweisen, wobei diese Annotationen
- in der Lokalisierungs-Variante (S1.1) Heatmaps
- in der Lokalisierungs-Variante (S1.2) Bounding Boxes
- in der Lokalisierungs-Variante (S1.3) Segmentierungsmasken
aufweisen.

10. Computerprogramm umfassend computerlesbaren Code, das, wenn es von einem computergestützten DVT-System (12) ausgeführt wird, das DVT-System (12) veranlasst, die Verfahrensschritte eines der vorhergehenden Verfahrensansprüche auszuführen.

11. Computergestütztes DVT-System (12) umfassend ein Röntgengerät (13) und eine Recheneinheit (19) die zur Ausführung des Computerprogramms nach Anspruch 10 konfiguriert ist.

## Claims

1. A computer-implemented method for automatically generating a reprojection panorama view (RPV) (1) from a dental DVT volume of a patient, **characterised in that** the method comprises the following steps;
(S1) localising dentally relevant anatomical structures (2) in the DVT volume by utilising a machine learning method;
(S2) automatically placing a guide curve (3) by optimising the same on the basis of the position of the localised dentally relevant anatomical structures (2),
wherein the guide curve (3) is produced as follows:
curve which is definable by knot points (10) which can be freely chosen and an interpolation rule; or
curve which is selected from a set of predefined curve shapes and can be adapted under geometric transformations;
(S3) defining a projection region (4) of the reprojection panorama view (1) using the placed guide curve (3) without manual steps in the DVT volume so that the localised dentally relevant anatomical structures (3) are comprised;
(S4) creating the reprojection panorama view (1) by reprojecting the DVT volume in the defined projection region (4).

2. The computer-implemented method according to Claim 1, **characterised in that** the localising step (S1) comprises one of the following variants:
- (S1.1) localising the centres (11) of the dental relevant anatomical structures (2) by applying at least one trained CNN to transform the DVT volume into heat maps which indicate the position of the dentally relevant anatomical structures (2) by voxels lying above a threshold value;
- (S1.2) localising and determining the dimensions of the dentally relevant anatomical structures (2) with the aid of a trained machine learning method which outputs bounding boxes; or
- (S1.3) localising and determining the exact shape of the dentally relevant anatomical structures (2) by a trained machine learning method which outputs segmentation masks.

3. The computer-implemented method according to any one of the preceding claims, wherein the optimisation is carried out with respect to one or more of the following criteria:
- minimising a distance measure between the guide curve (3) and the localised dentally relevant anatomical structures (2), distance measures can be:
a) sum of the distances between the structures (2) and their nearest perpendicular points on the guide curve (3);
b) weighted sum of the distances between the indicated structures (2) and their nearest perpendicular points on the guide curve (3), wherein another weight is used depending on the anatomical structure (2) and/or curve region, wherein the distances are calculated by any arbitrary distance metric;
- maintaining the aesthetics of the resulting RPV (1), wherein at least one of the following criteria is taken as the basis as the measure for the aesthetics: avoiding local distortions of the RPV (1), reducing the imaging-related asymmetry of the RPV (1);
- in the case of curves spanned by freely chosen knot points (10), limiting the curve complexity which is determined by the number of the knot points (10) or degree of a polynomial.

4. The computer-implemented method according to any one of the preceding claims, **characterised in that** the dentally relevant anatomical structures (2) are at least one of the following structures: temporomandibular joint, jawbone, teeth, root tips, implants, Foramen Mandibulae, Foramen Mentale, Foramen incisivum, Foramen Palatinum Majus, Foramen infraorbitale, Processus coronoideus, Spina Nasalis Anterior, Spina Nasalis Posterior, canalis mandibularis, canalis incisivus.

5. The computer-implemented method according to any one of the preceding claims, wherein in the defining step (S3), the projection region (4) is determined by extending, in a transverse sectional plane (6) with respect to the patient, the guide curve (3) to a two-dimensional surface having a fixed thickness or a thickness profile specified in advance along the curve in the transverse plane, and subsequently extruding said surface along the longitudinal axis of the patient.

6. The computer-implemented method according to Claim 5, wherein in the defining step (S3), the projection region (4) in the transverse sectional planes in which dentally relevant anatomical structures (2) were found in the localising step (S1) is locally displaced along the respective projection direction in each case in such a way that the projection region (4) runs through the dentally relevant anatomical structures (2).

7. The computer-implemented method according to Claim 6, wherein the necessary displacement of the projection region (4) is interpolated between the full displacement in the transverse sectional planes with dentally relevant structures (2) and no displacement starting from a suitably chosen distance between the relevant structures (2) and the guide curve (3).

8. The computer-implemented method according to any one of the preceding Claims 5 to 7, wherein in the defining step (S3), the thickness (D) of the projection region (4) is automatically chosen either locally or globally in such a way that the dentally relevant anatomical structures (2) lie completely or for the most part within the projection region (4).

9. The computer-implemented method according to any one of the preceding Claims 1 to 8, wherein in the localising step (S1), for training, data pairs have DVT volumes and annotations, wherein these annotations have
- heat maps in the localisation variant (S1.1)
- bounding boxes in the localisation variant (S1.2)
- segmentation masks in the localisation variant (S1.3).

10. A computer program comprising computer-readable code which, when it is executed by a computerised DVT system (12), prompts the DVT system (12) to execute the method steps of any one of the preceding method claims.

11. A computerised DVT system (12) comprising an X-ray device (13) and a computing unit (19) which is configured to execute the computer program according to Claim 10.

## Revendications

1. Procédé implémenté par ordinateur pour générer automatiquement une vue panoramique par réprojection (VPR) (1) à partir d'un volume dentaire DTV d'un patient, **caractérisé en ce que** le procédé comprend les étapes suivantes ;
(S1) localisation des structures anatomiques dentaires pertinentes (2) dans le volume DTV en utilisant un procédé d'apprentissage automatique ;
(S2) placement automatique d'une courbe de guidage (3) en l'optimisant sur la base de la position des structures anatomiques dentaires pertinentes (2) localisées,
la courbe de guidage (3) étant obtenue comme suit :
courbe définissable par des points d'appui (10) sélectionnables librement et une règle d'interpolation ; ou
courbe sélectionnée parmi un ensemble de formes de courbes prédéfinies et adaptable sous des transformations géométriques ;
(S3) définition d'une zone de projection (4) de la vue panoramique de réprojection (1) en utilisant la courbe de guidage (3) placée sans étapes manuelles dans le volume DTV, de sorte que les structures anatomiques dentaires pertinentes (3) localisées soient comprises ;
(S4) génération de la vue panoramique de réprojection (1) par réprojection du volume DTV dans la zone de projection définie (4).

2. Procédé implémenté par ordinateur selon la revendication 1, **caractérisé en ce que** l'étape de localisation (S1) comprend une des variantes suivantes :
- (S1.1) localisation des points centraux (11) des structures anatomiques dentaires pertinentes (2) en appliquant au moins un CNN entraîné pour transformer le volume DTV en cartes de chaleur indiquant la position des structures anatomiques dentaires pertinentes (2) par des voxels situés au-dessus d'une valeur limite ;
- (S1.2) localisation et détermination des dimensions des structures anatomiques dentaires pertinentes (2) à l'aide d'un procédé d'apprentissage automatique entraîné qui fournit des bounding boxes ; ou
- (S1.3) localisation et détermination de la forme exacte des structures anatomiques dentaires pertinentes (2) par un procédé d'apprentissage automatique entraîné qui fournit des masques de segmentation.

3. Procédé implémenté par ordinateur selon l'une des revendications précédentes, dans lequel l'optimisation est effectuée par rapport à un ou plusieurs des critères suivants :
- minimisation d'une mesure de distance entre la courbe de guidage (3) et les structures anatomiques dentaires pertinentes localisées (2), les mesures de distance peuvent être :
a) somme des distances entre les structures (2) et leurs points d'aplomb les plus proches sur la courbe de guidage (3) ;
b) somme pondérée des distances entre lesdites structures (2) et leurs points d'aplomb les plus proches sur la courbe de guidage (3), un poids différent étant utilisé selon la structure anatomique (2) et/ou la région de la courbe, les distances étant calculées par une métrique de distance quelconque ;
- conservation de l'esthétique de la VPR (1) qui en résulte, en prenant comme mesure de l'esthétique au moins un des critères suivants : prévention des distorsions locales de la VPR (1), réduction de l'asymétrie de la VPR (1) due à la prise de vue ;
- dans le cas de courbes délimitées par des points d'appui (10) selectionnables librement, limitation de la complexité de la courbe, qui est déterminée par le nombre de points d'appui (10) ou le degré d'un polynôme.

4. Procédé implémenté par ordinateur selon l'une des revendications précédentes, **caractérisé en ce que** les structures anatomiques dentaires pertinentes (2) sont au moins l'une des structures suivantes : articulation temporo-mandibulaire, os de la mâchoire, dents, apex des racines, implants, foramen mandibulaire, foramen mental, foramen incisif, foramen palatinum majus, foramen infra-orbitaire, processus coronoïde, épine nasale antérieure, épine nasale postérieure, canal mandibulaire, canal incisif.

5. Procédé implémenté par ordinateur selon l'une des revendications précédentes, dans lequel, dans l'étape de définition (S3), la zone de projection (4) est déterminée en élargissant, dans un plan de coupe transversal (6) par rapport au patient, la courbe de guidage (3) en une surface bidimensionnelle ayant une épaisseur fixe ou un profil d'épaisseur prédéterminé le long de la courbe dans le plan transversal, et en extrudant ensuite cette surface le long de l'axe longitudinal du patient.

6. Procédé implémenté par ordinateur selon la revendication 5, dans lequel, au cours de l'étape de définition (S3), la zone de projection (4) est déplacée localement dans les plans de coupe transversaux dans lesquels des structures anatomiques dentaires pertinentes (2) ont été trouvées au cours de l'étape de localisation (S1), le long de la direction de projection respective, de telle sorte que la zone de projection (4) passe par les structures anatomiques dentaires pertinentes (2).

7. Procédé implémenté par ordinateur selon la revendication 6, dans lequel le déplacement nécessaire de la zone de projection (4) entre le déplacement complet dans les plans de coupe transversaux avec des structures dentaires pertinentes (2) et aucun déplacement est interpolé à partir d'une distance sélectionné de manière appropriée entre les structures pertinentes (2) et la courbe de guidage (3).

8. Procédé implémenté par ordinateur selon l'une des revendications 5 à 7 précédentes, dans lequel, dans l'étape de définition (S3), l'épaisseur (D) de la zone de projection (4) est sélectionnée automatiquement soit localement, soit globalement, de telle sorte que les structures anatomiques dentaires pertinentes (2) se trouvent entièrement ou en grande partie à l'intérieur de la zone de projection (4).

9. Procédé implémenté par ordinateur selon l'une des revendications 1 à 8 précédentes, dans lequel, lors de l'étape de localisation (S1) pour l'entraînement, des paires de données de volumes DTV et d'annotations présentent lesdites annotations
- cartes de chaleur dans la variante de localisation (S1.1)
- bounding boxes dans la variante de localisation (S1.2)
- masques de segmentation dans la variante de localisation (S1.3).

10. Programme informatique comprenant un code lisible par ordinateur qui, lorsqu'il est exécuté par un système DTV assisté par ordinateur (12) amène le système DTV (12) à exécuter les étapes de procédé de l'une des revendications de procédé précédentes.

11. Système DTV assisté par ordinateur (12) comprenant un appareil de radiographie (13) et une unité de calcul (19) qui est configurée pour exécuter le programme informatique selon la revendication 10.
